# EUROPÄISCHE PATENTANMELDUNG

(11) **EP 2 036 472 A2**
(43) Veröffentlichungstag der Anmeldung: **18.03.2009**
(21) Anmeldenummer: 08405170.5
(22) Anmeldetag: 07.07.2008
(51) Int. Cl.: A47J 31/44

(54) **Anordnung zur Erzeugung von Milchschaum**

(30) Priorität: 12.09.2007 CH 14242007
(71) Anmelder: Cafina AG, 5502 Hunzenschwil (CH)
(72) Erfinder: Muheim, Christian, 6221 Rickenbach (CH)
(74) Vertreter: Rottmann, Maximilian

(57) **Zusammenfassung**

Es wird eine Anordnung zur Erzeugung von Milchschaum vorgeschlagen, welche eine Milchzufuhrleitung (2), Mittel (6) zum Erhitzen der Milch sowie ein mit einem Hauptkanal (15) versehenes Mischelement (1) zum Vermischen der durch den Hauptkanal (15) strömenden Milch umfasst. Das Mischelement (1) weist einen mit einer Vielzahl von in den Hauptkanal (15) mündenden Öffnungen versehenen Grundkörper (14) auf. Über diese Öffnungen wird der durchströmenden Milch die die Aufschäumung bewirkende Luft unter Überdruck zugeführt.

## Beschreibung

Die Erfindung betrifft eine gemäss dem Oberbegriff des Anspruchs 1 ausgebildete Anordnung zur Erzeugung von Milchschaum sowie ein Verfahren zur Erzeugung von Milchschaum gemäss dem Anspruch 12.

Derartige Anordnungen kommen insbesondere in Espressomaschinen oder zusammen mit Espressomaschinen zum Einsatz, wobei der Milchschaum beispielsweise für die Herstellung von Cappuccino oder Latte Macchiato verwendet wird.

Zur Erzeugung von Milchschaum ist eine Vielzahl sogenannter Emulgiereinrichtungen bekannt. Gattungsgemässe Emulgiereinrichtungen verfügen im allgemeinen über ein Mischelement, das mit einem in eine Saugkammer mündenden Dampfzufuhrkanal versehen ist. Die Saugkammer ihrerseits ist mit einem Milchzufuhrkanal und einem Luftzufuhrkanal verbunden. Durch den Dampfstrom wird in der Saugkammer unter Ausnutzung des sogenannten Venturi Effekts ein Unterdruck erzeugt, welcher bewirkt, dass Milch über einen Milchzufuhrkanal und Luft über einen Luftzufuhrkanal in die Saugkammer gesaugt werden. Dabei entsteht ein Dampf-Luft-Milchgemisch, welches in einer nachfolgenden Emulgierkammer in eine turbulente Strömung versetzt wird, so dass eine heisse Emulsion aus Milch und Luft entsteht. Derartige Emulgiereinrichtungen sind beispielsweise aus der EP 0 195 750 sowie der EP 0 858 757 bekannt.

Da bei den meisten der bekannten Emulgiereinrichtungen die Luft an einer einzigen Stelle zugeführt wird, müssen Massnahmen getroffen werden, damit sich die Luft mit der Milch nachfolgend zu einem homogenen Milchschaum vermischt.

Es ist daher die Aufgabe der Erfindung, eine Anordnung zur Erzeugung von Milchschaum derart auszubilden, dass mit ihr ein qualitativ hochwertiger Milchschaum erzeugt werden kann, ohne dass dem eigentlichen Mischelement eine Emulgiereinrichtung nachgeschaltet werden muss, wobei die Anordnung kompakt und einfach aufgebaut sein soll.

Diese Aufgabe wird durch die im Anspruch 1 angeführten Merkmale gelöst.

Indem die Anordnung mit einem Mischelement versehen ist, das einen mit einer Vielzahl von in den Hauptkanal mündenden Öffnungen versehenen Grundkörper aufweist, über welchen der durchströmenden Milch das die Aufschäumung bewirkende Medium unter Überdruck zuführbar ist, kann auf einfache Weise ein qualitativ hochwertiger Milchschaum erzeugt werden. Es hat sich nämlich gezeigt, dass das zwangsweise Zudosieren von kleinsten Mengen Luft an unzähligen Stellen zu einem qualitativ besonders hochwertigen Milchschaum führt, der sich u.a. durch seine Homogenität, Stabilität, Steifigkeit und die kleinen Schaumblasen auszeichnet.

Bevorzugte Ausführungsbeispiele der Anordnung sind in den abhängigen Ansprüchen 2 bis 11 umschrieben.

So sieht ein bevorzugtes Ausführungsbeispiel vor, dass dem Mischelement das Mittel zum Erhitzen der Milch vorgeschaltet ist. Dadurch kann dem Mischelement erwärmte Milch zugeführt werden, was ebenfalls dazu beiträgt, dass ein qualitativ hochwertiger Milchschaum erzeugt wird.

Im Anspruch 12 wird zudem ein Verfahren zur Erzeugung von Milchschaum mit einer gemäss einem der Ansprüche 1 bis 11 ausgebildeten Anordnung beansprucht. Bevorzugte Weiterbildungen des Verfahrens sind in den abhängigen Ansprüchen 13 bis 16 definiert.

Nachfolgend werden zwei Ausführungsbeispiele der Erfindung anhand von Zeichnungen näher erläutert. Dabei zeigt:

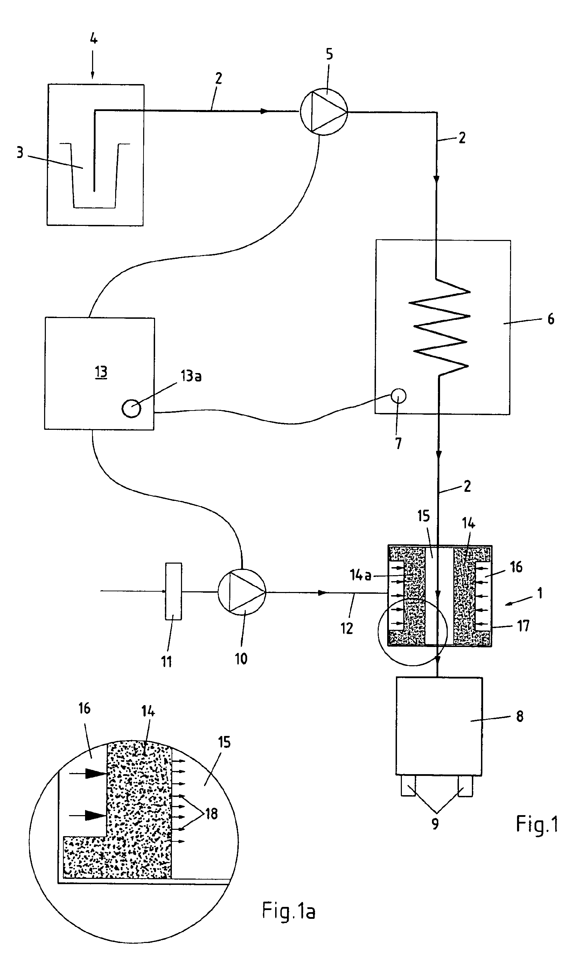

Fig. 1 eine schematische Darstellung eines ersten Ausführungsbeispiels einer Anordnung zur Erzeugung von Milchschaum;
Fig. 1 a einen vergrösserten Ausschnitt aus der Fig. 1, und
Fig. 2 eine schematische Darstellung eines zweiten Ausführungsbeispiels einer Anordnung zur Erzeugung von Milchschaum.

Die Anordnung zur Erzeugung von Milchschaum gemäss Fig. 1 weist ein Mischelement 1 auf, in welchem der durchströmenden Milch Luft zur Erzeugung des Milchschaums zugeführt wird. Das Mischelement 1 ist über eine Milchleitung 2 mit einem Milchbehälter 3 verbunden, der in einer Kühlvorrichtung 4 aufgenommen ist. Zur zwangsweisen Förderung der Milch ist eine Milchpumpe 5 vorgesehen, der ein elektrisch betriebener Durchlauferhitzer 6 zum Erwärmen der Milch nachgeschaltet ist. Der Durchlauferhitzer 6 ist mit einem schematisch angedeuteten Temperatursensor 7 versehen, mittels welchem die Temperatur der im Durchlauferhitzer erwärmten Milch gemessen werden kann. Mittels einer Luftpumpe 10 kann dem Mischelement 1 über eine Leitung 12 zwangsweise Luft zugeführt werden. Der Luftpumpe 10 ist ein Luftfilter 11 vorgeschaltet, welches als herkömmliches mechanisches Filter oder beispielsweise in Form eines Aktivekohle-Filters ausgebildet sein kann. Im weiteren ist eine elektronische Steuervorrichtung 13 vorgesehen, welche mit den beiden Pumpen 5, 10 sowie dem Erhitzer 6 und dem Temperatursensor 7 elektrisch verbunden ist und der Steuerung der gesamten Anordnung dient. Die Steuerungsvorrichtung 13 ist mit zumindest einer Taste 13a zum Starten bzw. Stoppen des Schäumvorgangs versehen. Das Mischelement 1 ist auslassseitig mit einem Auslasselement 8 verbunden, welches zwei Auslässe 9 aufweist, über welche der Milchschaum austreten kann. Dieses Auslasselement 8 kann einen Bestandteil einer Kaffeemaschine bilden, wobei es in diesem Fall auch als Auslass für die zubereiteten Kaffeegetränke dienen kann. Anstelle eines elektrisch betriebenen Durchlauferhitzers 6 können auch andere Mittel zum Erhitzen der Milch vorgesehen werden. Beispielsweise kann das Erhitzen der Milch mittels Dampf erfolgen.

Das Mischelement 1 weist einen aus einem porösem Material gefertigten Grundkörper 14 auf, der in einem Gehäuse 17 aufgenommen ist. Der Grundkörper 14 besitzt einen zentralen Milchkanal 15 sowie eine den Milchkanal koaxial umfassende, ringförmig ausgebildete Luftkammer 16, welche mittels der Luftpumpe 10 derart unter Überdruck gesetzt werden kann, dass Luft aus der Luftkammer 16 durch den porösen Grundkörper 14 hindurch in den Milchkanal 15 eindringen und sich mit der durchströmenden Milch vermischen kann. Der im wesentlichen zylindrisch ausgebildete Grundkörper 14 weist eine den Hauptkanal begrenzende Trennwand 14a auf. Es versteht sich, dass nicht der gesamte Grundkörper 14 aus einem porösen Material gefertigt werden muss, sodern es genügt, wenn die zylindrische Trennwand 14a porös ausgebildet ist.

Die Wirkungsweise dieser Anordnung stellt sich wie folgt dar:
Durch Drücken der Taste 13a wird der Aufschäumvorgang gestartet. Dabei wird sowohl die Milchpumpe 5 wie auch der Durchlauferhitzer 6 aktiviert, so dass die aus dem Milchbehälter 3 geförderte Milch im Durchlauferhitzer 6 erwärmt wird, um danach in das Mischelement 1 einzuströmen. Gleichzeitig wird auch die Luftpumpe 10 aktiviert. Dadurch wird der ringförmigen Luftkammer 16 des Mischelements 1 Luft unter Überdruck zugeführt. Vorzugsweise wird die Luftpumpe 10 zusammen mit der Milchpumpe 5 aktiviert, so dass der in das Mischelement 1 einströmenden Milch von Anfang an Luft zugeführt wird.

Da die in das Mischelement 1 einströmende Milch bereits auf eine vordefinierte Temperatur erhitzt wurde, wird die Luft der warmen Milch zugeführt. Die Temperatur der erhitzten Milch am Auslass des Durchlauferhitzers 6 kann mittels des Temperatursensors 7 gemessen und ggf. mittels der Steuerungsvorrichtung 13 auf einen vorgegebenen Sollwert nachjustiert werden. Die Milch wird im Durchlauferhitzer 6 üblicherweise auf eine Temperatur von ca. 60°-70° Celsius erhitzt. Durch die poröse Ausbildung des Grundkörpers 14 wird der Milch beim Durchströmen durch den Grundkörper 14 an unzähligen Stellen Luft in feinsten Mengen zudosiert. Das zwangsweise Zuführen der Luft bewirkt, dass sich die Luft sofort mit der warmen Milch vermischt. Jedenfalls steht bereits am Auslass des Mischelements 1 ein feinporiger Milchschaum zur Verfügung. Der Durchmesser des zentralen Milchkanals 15 ist derart auf die pro Zeiteinheit geförderte Milchmenge abgestimmt, dass diese mit einer vorbestimmten Geschwindigkeit durch das Mischelement 1 strömt, wobei während des Aufschäumvorgangs vorzugsweise immer soviel Milch durch den zentralen Milchkanal 15 gefördert werden sollte, dass dieser vollständig mit Milch gefüllt ist. Das Mischelement 1 kann bei richtiger Dimensionierung in jeder beliebigen Lage eingebaut werden, ohne dass die Qualität des erzeugten Milchschaums in nennenswerter Weise beeinträchtigt wird. Daher ist es unerheblich, ob das Mischelement von der Milch vertikal, horizontal oder schräg durchströmt wird.

Durch die Wahl des Materials des Grundkörpers 14 wie auch durch die Grösse der Poren kann bewirkt werden, dass die Milch unter atmosphärischen Bedingungen nicht nennenswert in die Poren des Grundkörpers 14 eindringen kann. Die Poren sollten vorzugsweise einen Durchmesser von maximal ca. 0.3 Millimetern aufweisen. Jedenfalls kann durch geeignete Materialwahl des Grundkörpers 14 sowie durch die Abstimmung der Porengrösse auf das Material bzw. umgekehrt, die Verschmutzungsneigung des Grundkörpers 14 herabgesetzt werden. Der Grundkörper 14 wird vorzugsweise aus einem hydrophoben und oleophoben Material gefertigt. Als Beispiel hierfür sei PTFE (Teflon) angeführt. Die Herstellung des Grundkörpers kann beispielsweise durch Sintern erfolgen.

Versuche mit einer derartig ausgebildeten Anordnung haben ergeben, dass bereits am Ausgang des Mischelements 14 ein qualitativ hochwertiger Milchschaum zur Verfügung steht. Es müssen daher keine nachgeschalteten Emulgiereinrichtungen zur Homogenisierung des Milch-, Luft- und ggf. Dampf-Gemischs vorgesehen werden.

Nach der Zubereitung von Milchschaum wird das Mischelement 1 zu Reinigungszwecken vorzugsweise mittels Wasser gespült, wobei es natürlich keinen Sinn macht, das Mischelement 1 nach jedem Schäumvorgang zu reinigen, wenn in kurzen Intervallen weitere Schäumvorgänge ablaufen. Aus diesem Grund wird nach einem Schäumvorgang vorzugsweise eine bestimmte Zeitspanne abgewartet, bevor ein Spülvorgang eingeleitet wird. Die Steuerung des Spülvorgangs kann ebenfalls mittels der Steuervorrichtung 13 initiiert werden.

Die Fig. 1 a zeigt einen vergrösserten Ausschnitt aus der Fig. 1. In dieser Darstellung ist schematisch angedeutet, wie die Luft aus der Ringkammer 16 durch den porösen Grundkörper 14 hindurch in den Hauptkanal 15 gelangt und dort über eine Vielzahl von durch Poren gebildete Öffnungen austritt, was durch Pfeile 18 angedeutet ist. Im vorliegenden Beispiel wird dem Hauptkanal 15 bzw. der durchströmenden Milch entlang eines Abschnitts von einigen Zentimetern ringförmig über den gesamten Umfang Luft in feinsten Mengen zudosiert. Indem der durchströmenden Milch an unzähligen Stellen Luft in feinsten Mengen zudosiert wird, entsteht schon im Mischelement 1 ein homogener und feinporiger Milchschaum. Die Grösse der Poren sollte zumindest in dem an den Hauptkanal 1 angrenzenden Bereich des Grundkörpers 14 so gewählt werden, dass die Milch nicht in nennenswerter Menge in die Poren eindringen kann, wie dies bereits vorgängig erläutert wurde.

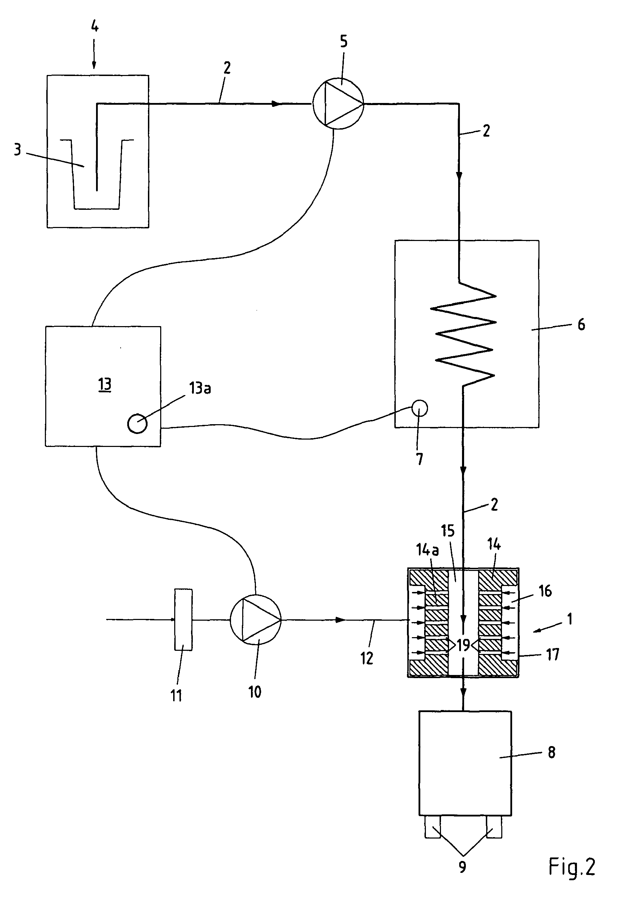

Fig. 2 zeigt in schematischer Darstellung ein alternatives Ausführungsbeispiel einer Anordnung zur Erzeugung von Milchschaum. Der wesentlichste Unterschied zu dem vorgängigen Ausführungsbeispiel besteht darin, dass das Mischelement 1 einen Grundkörper 14 aufweist, der nicht aus einem porösen Material gefertigt ist, sondern eine Vielzahl von Kanälen 19 aufweist, über welche der durchströmenden Milch Luft zwangsweise zugeführt werden kann. Der Grundkörper 14 weist wiederum einen zentralen Milchkanal 15 sowie eine ringförmige Luftkammer 16 auf, welche mittels der Luftpumpe 10 unter Überdruck gesetzt werden kann. Von dieser ringförmigen Luftkammer 16 führen die genannten Kanäle 19 radial durch den Grundkörper 14 bzw. die Trennwand 14a in den zentralen Milchkanal 15. Der Grundkörper 14 ist vorzugsweise wiederum aus einem hydrophoben und oleophoben Material gefertigt und die Kanäle 19 weisen vorzugsweise einen Durchmesser von maximal ca. 0.3 Millimetern auf. Dadurch kann sichergestellt werden, dass die durchströmende Milch unter atmosphärischen Bedingungen, d.h. auch wenn die ringförmige Luftkammer 16 nicht unter Überdruck steht, nicht nennenswert in die Kanäle 19 eindringen kann. Alternativ dazu können auch Kanäle mit einem grösseren Durchmesser vorgesehen werden. In diesem Fall sollte vorzugsweise jedoch sichergestellt werden, dass die ringförmige Luftkammer 16 immer unter Überdruck steht, wenn Milch durch den Hauptkanal 15 geleitet wird, damit die Milch auch bei grösseren Kanälen nicht in diese eindringen kann. Dies ist insbesondere aus hygienischen Gründen wichtig, damit sich die Milch nicht in den Kanälen 19 festsetzen und diese verunreinigen sowie zusetzen kann.

Der Vorteil bei beiden Ausführungsvarianten besteht jedoch darin, dass die jeweilige Anordnung vergleichsweise einfach aufgebaut ist, aus relativ wenigen Einzelteilen besteht und ein qualitativ hochwertiger, namentlich ein homogener, feinporiger und fester Milchschaum erzeugt werden kann. Zudem steht der feinporige Milchschaum direkt am Auslass des Mischelements 1 zur Verfügung, so dass auf nachfolgende Emulgiereinrichtungen verzichtet werden kann. Im Vergleich mit herkömmlichen Anordnungen brauchen auch kaum Ventile oder dgl. vorgesehen zu werden. Die Anordnung kann daher auch sehr kompakt ausgebildet und kostengünstig realisiert werden. Zudem hat sich die Anordnung in Bezug auf variierende Umgebungsbedingungen wie auch verändernde Betriebsparameter als unkritisch erwiesen.

Zu erwähnen ist, dass anstelle des vorgängig beschriebenen, elektrisch betriebenen Durchlauferhitzers natürlich auch andere Mittel, wie beispielsweise Dampf, zum Erhitzen der Milch vorgesehen werden können. In Bezug auf die Qualität des erzeugten Milchschaums hat es sich jedoch als vorteilhaft erwiesen, wenn die Milch vor dem Einleiten in das Mischelement, also vor dem zwangsweisen Zuführen der Luft, auf die gewünschte Temperatur gebracht worden ist. Grundsätzlich wäre es aber auch möglich, die Milch erst nach dem Zuführen der Luft zu erhitzen.

Durch das zwangsweise Fördern der Milch wie auch der Luft kann einerseits die absolute Menge der pro Zeiteinheit geförderten Menge an Milch- bzw. Luft variiert werden. Andererseits kann aber auch das Verhältnis Mich/Luft verändert werden. Dazu kann beispielsweise in der Luftzufuhrleitung 12 eine verstellbare Blende angeordnet werden.

## Patentansprüche

1. Anordnung zur Erzeugung von Milchschaum, mit einer Milchzufuhrleitung (2), zumindest einem Mittel (6) zum Erhitzen der Milch sowie einem mit einem Hauptkanal (15) versehenen Mischelement (1) zum Vermischen der durch den Hauptkanal (15) strömenden Milch mit dem die Aufschäumung bewirkenden Medium, **dadurch gekennzeichnet, dass** das Mischelement (1) einen mit einer Vielzahl von in den Hauptkanal (15) mündenden Öffnungen versehenen Grundkörper (14) aufweist, über welchen der durchströmenden Milch das die Aufschäumung bewirkende Medium unter Überdruck zuführbar ist.

2. Anordnung nach Anspruch 1, **dadurch gekennzeichnet, dass** der Grundkörper (14) des Mischelements (1) aus einem hydrophoben und/oder oleophoben Material gefertigt ist.

3. Anordnung nach Anspruch 1 oder 2, **dadurch gekennzeichnet, dass** dem Mischelement (1) das Mittel (6) zum Erhitzen der Milch vorgeschaltet ist.

4. Anordnung nach einem der vorhergehenden Ansprüche, **dadurch gekennzeichnet, dass** der Durchmesser der in den Hauptkanal (15) mündenden Öffnungen so gewählt ist, dass die durchströmende Milch unter atmosphärischen Bedingungen nicht nennenswert in diese eindringen kann.

5. Anordnung nach einem der vorhergehenden Ansprüche, **dadurch gekennzeichnet, dass** der Grundkörper (14) eine den Hauptkanal begrenzende Trennwand (14a) aufweist, in welche die genannten Öffnungen eingelassen sind.

6. Anordnung nach einem der vorhergehenden Ansprüche, **dadurch gekennzeichnet, dass** der Grundkörper (14) zylindrisch ausgebildet ist.

7. Anordnung nach einem der vorhergehenden Ansprüche, **dadurch gekennzeichnet, dass** der Hauptkanal (15) in den Grundkörper (14) eingelassen ist und der Grundkörper (14) mit einer den Hauptkanal (15) zumindest teilweise koaxial umgebenden Ringkammer (16) versehen ist, wobei der Grundkörper (14) aus einem porösen Material gefertigt ist, so dass die der Ringkammer (16) unter Überdruck zugeführte Luft über die Poren in den Hauptkanal (15) gelangen kann.

8. Anordnung nach einem der vorhergehenden Ansprüche, **dadurch gekennzeichnet, dass** die in den Hauptkanal (15) mündenden Öffnungen einen Durchmesser von maximal 0.3 Millimetern aufweisen.

9. Anordnung nach einem der vorhergehenden Ansprüche, **dadurch gekennzeichnet, dass** der Grundkörper (14) des Mischelements (1) mittels Sintern hergestellt ist.

10. Anordnung nach einem der vorhergehenden Ansprüche, **dadurch gekennzeichnet, dass** die Anordnung eine Pumpe (10) zum zwangsweisen Zuführen der Luft sowie einen der Pumpe (10) vorgeschalteten Luftfilter (11) umfasst.

11. Anordnung nach einem der vorhergehenden Ansprüche, **dadurch gekennzeichnet, dass** die zum Erhitzen der Milch vorgesehenen Mittel einen elektrisch betriebenen Durchlauferhitzer (6) und einen Temperatursensor (7) umfassen, mittels welchem die Temperatur der erhitzten Milch erfassbar ist.

12. Verfahren zur Erzeugen von Milchschaum, mit einer gemäss einem der Ansprüche 1 bis 11 ausgebildeten Anordnung, **dadurch gekennzeichnet, dass** der durch das Mischelement (1) strömenden Milch über eine Vielzahl von Öffnungen Luft unter Überdruck zugeführt wird.

13. Verfahren nach Anspruch 12, **dadurch gekennzeichnet, dass** die Milch vor dem Einleiten in das Mischelement (1) erhitzt wird.

14. Verfahren nach Anspruch 12 oder 13, **dadurch gekennzeichnet, dass** dem Mischelement (1) zumindest solange Luft unter Druck zugeführt wird, bis der Durchfluss der aufzuschäumenden Milch durch das Mischelement (1) gestoppt wird.

15. Verfahren nach einem der Ansprüche 12 bis 14, **dadurch gekennzeichnet, dass** die Luft über die Öffnungen in den Hauptkanal (15) des Mischelements (1) eingeleitet wird, bevor dem Mischelement (1) die aufzuschäumende Milch zugeführt wird, und dass die Luftzufuhr erst gestoppt wird, nachdem der Durchfluss der Milch durch das Mischelement (1) beendet ist.

16. Verfahren nach einem der Ansprüche 12 bis 15, **dadurch gekennzeichnet, dass** die Milch vor dem Einleiten in das Mischelement (1) auf eine Temperatur von zumindest 30°C, insbesondere zumindest 60°C erhitzt wird.

17. Espressokaffeemaschine mit einer gemäss einem der Ansprüche 1 bis 12 ausgebildeten Anordung zur Erzeugung von Milchschaum.
